# EUROPEAN PATENT APPLICATION

(11) **EP 2 575 241 A2**
(43) Date of publication of application: **03.04.2013**
(21) Application number: 12186059.7
(22) Date of filing: 26.09.2012
(51) Int. Cl.: H02K 5/22

(54) **Motor-driven compressor**

(30) Priority: 27.09.2011 JP 2011211193
(71) Applicant: Kabushiki Kaisha Toyota Jidoshokki, Kariya-shi, Aichi 448-8671 (JP)
(72) Inventor: Fukasaku, Hiroshi, Kariya-shi,, Aichi 448-8671 (JP); Horiba, Tatsuya, Kariya-shi,, Aichi 448-8671 (JP)
(74) Representative: TBK

(57) **Abstract**

A motor of motor-driven compressor includes a plurality of phase coils, and a plurality of phase wires are drawn from each of the phase coils. The phase wires are bundled and form a phase wire bundle. The tip portions of the phase wires are connected electrically by a conductive ring caulked by heating. A wire joint is formed so as to connect electrically each phase wire at the tip portion of the phase wire bundle. A storage chamber is formed so as to penetrate a cluster block. The wire joint is inserted in the storage chamber. The insertion opening is closed by a cylindrical member made of rubber.

## Description

### BACKGROUND OF THE INVENTION

The present invention relates to a motor-driven compressor comprising an electric motor which is accommodated inside the shell, wherein a phase wire bundle is formed so that a plurality of phase wire drawn from each plural phase coils are bundled up. In the compressor, a wire joint is formed so that each phase is electrically connected at the tip of the phase wire bundle, and a neutral point is formed.

In the motor-driven compressor disclosed in Japanese Utility Model Application Publication No. 5-38368, a plurality of lead wires which are drawn respectively from each phase coil are connected respectively to a plurality of connecting terminals within the cluster. A phase wire bundle is formed by bundling up the phase wires which form the neutral point, and tip portions of each phase wire bundle are connected as a whole to the unconnected terminals (wire joint).

When the neutral point gets into an inner peripheral side of the stator, the members which is to be originally located in the inner peripheral side of the stator are prevented from assembling. In Japanese Utility Model Application Publication No. 5-38368, the neutral point is tied down by a thread so that the neutral point does not sway.

In this kind of motor-driven compressor, refrigerant gas circulates inside the motor-driven compressor at the normal operating time. When the compressor is stopped and the refrigerant gas is cooled, however, the liquefied refrigerant gas (liquid refrigerant) is collected in the housing.

Therefore, when the wire joint at the neutral point is soaked in the refrigerant collected in the housing, the wire joint is conducted electrically to the housing through the liquid refrigerant. When the motor-driven compressor is operated in this situation, the electric current that flows through the wire joint might be leaked to the housing through the liquid refrigerant.

Japanese Unexamined Patent Application Publication No. 2005-278289 discloses that the metal sleeve that is put at the tip of the neutral point line is swaged by electrical power and pressurization, and that an insulating cap is applied at the neutral point terminal to prevent a short circuit between the tip portion of the neutral point line and the winding wire in the dynamoelectric machine. In the electric swaging (thermal caulking), the neutral point terminal is formed by melting the insulating coating (resin) of the neutral point wire. Therefore, it is not necessary to remove the insulating coating in advance. It is easy to form the neutral point terminal. Because the neutral point terminal is covered by the insulating cap, an electric current leak is prevented.

However, for preventing a swaying of the neutral point, it needs time to tie phase wires down in the way that is disclosed in Japanese Utility Model No. 5-38368. Therefore, the work efficiency of assembling the motor-driven compressor is deteriorated.

In the thermal caulking disclosed in Japanese Unexamined Patent Application Publication No. 2005-278289, the molten insulating coating material may be solidified again or carbonized. The molten insulating coating material remains near the neutral point terminal (wire joint), and the coating material may be peeled. As a result, the peeled pieces of the coating material adversely affect the motor-driven compressor and may clog up the compressor as foreign matters.

The object of the present invention is to improve the work efficiency of assembling the motor-driven compressor and to avoid adverse affect to the compressor by solidified molten pieces of the insulating coating material, which are caused by heat of thermal caulking.

### SUMMARY OF THE INVENTION

This object is solved by the features of claim 1.

In accordance with the present invention, a motor-driven compressor includes a shell. An electric motor, and a compression portion driven by the electric motor and compressing refrigerant are provided in the shell. A plurality of phase coils and a stator are provided in the electric motor. A plurality of lead wires and a plurality of phase wires drawn respectively from the plurality of phase coils are provided in the stator. A cluster block has a phase connector, and the lead wires are connected to the phase connector. A drive control portion of the electric motor outside of the shell is electrically connected to the phase connector through a conductive retainer penetrating the shell. A phase wire bundle is formed by binding the plurality of phase wires drawn respectively from the plurality of phase coils. A wire joint is formed at the tip portion of the phase wire bundle. Each phase wire is connected electrically at the tip portion of the phase wire bundle is formed by thermal caulking, and a neutral point is formed in the compressor. A storage chamber which is formed in the cluster block has an insertion opening on the outer periphery of the cluster block. The wire joint is inserted from the insertion opening to the storage chamber, and the insertion opening is closed by a closing member.

The advantage is that the solidified coating material which is melted once remains in the storage chamber since the wire joint is inserted into the storage chamber and the insertion opening is closed by the closing member. Therefore, the solidified coating material does not adversely affect the compressor.

Another advantage is that it is easy to set the wire joint into the storage chamber. Therefore, the work efficiency of assembling the compressor is improved.

In accordance with the present invention, in the motor-driven compressor, the closing member may be cylindrical and has a cylindrical hole, through which the wire joint is inserted.

The advantage is that the wire joint is arranged into the storage chamber in the condition that the wire bundle runs through the cylindrical hole.

In accordance with the present invention, in the motor-driven compressor, the closing member may be formed by connecting a first concave piece and a second concave piece.

The dividable structure of the cylindrical member makes it easy to run the wire bundle through the cylindrical hole in assembling.

In accordance with the present invention, in the motor-driven compressor, the closing member may have a cut line which extends to the cylindrical hole and the cut line may extend from one end of the closing member to the other end. The closing member may be developable from the cut line.

The developable structure of the closing member makes it easy to run the wire bundle through the cylindrical hole in assembling.

In accordance with the present invention, in the motor-driven compressor, the closing member may have a tapering outer periphery and a diameter of the tapering outer periphery decreases in the insertion direction.

The structure in that the closing member has a tapering outer periphery makes it easy to insert the cylindrical member which has the wire bundle interiorly into the insertion opening.

In accordance with the present invention, in the motor-driven compressor, the closing member may be made of rubber.

The rubber is a preferable material for closing the insertion opening.

In accordance with the present invention, in the motor-driven compressor, the storage chamber may be formed into a dead end shape not penetrating the cluster block.

The structure of a dead end shape makes it easy to protect the wire joint after assembling.

In accordance with the present invention, in the motor-driven compressor, the storage chamber and the plurality of phase connectors may be arranged in parallel.

The advantage is that the compressor is downsized.

In accordance with the present invention, in the motor-driven compressor, the compression portion, the electric motor, and the drive control portion may be arranged in line. The plurality of phase wires are drawn from an end of the stator near the compression portion.

The advantage is that the compressor is downsized.

Other aspects and advantages of the invention become apparent from the following description, taken in conjunction with the accompanying drawings, illustrating the principles of the invention by way of example.

### BRIEF DESCRIPTION OF THE DRAWINGS

The invention, together with the objects and advantages thereof, may best be understood by reference to the following description of the presently preferred embodiments together with the accompanying drawings in which:
Fig. 1 is a longitudinal sectional view of a motor-driven compressor according to a first embodiment of the present invention;
Fig. 2 is an enlarged fragmentary sectional view taken along the line A-A of Fig. 1;
Fig. 3A is an enlarged fragmentary horizontal sectional view of Fig. 1;
Fig. 3B is a perspective view of a cylindrical member 39;
Fig. 3C is a perspective view of a first concave piece 43 and a second concave piece 44;
Fig. 4A, 4B and 4C are explanations of thermal caulking;
Fig. 5A is an enlarged fragmentary horizontal sectional view of a motor-driven compressor according to a second embodiment of the present invention;
Fig. 5B is a perspective view of a cylindrical member 39A of the motor-driven compressor according to the second embodiment of the present invention;
Fig. 5C is a perspective view of a first concave piece 43A and a second concave piece 44A of the motor-driven compressor according to the second embodiment of the present invention;
Fig. 6A is an enlarged fragmentary horizontal sectional view of a motor-driven compressor according to a third embodiment of the present invention; and
Fig. 6B is a perspective view of a cylindrical member 39B of the motor-driven compressor according to the third embodiment of the present invention.

### DETAILED DESCRIPTION OF THE PREFERRED EMBODIMENTS

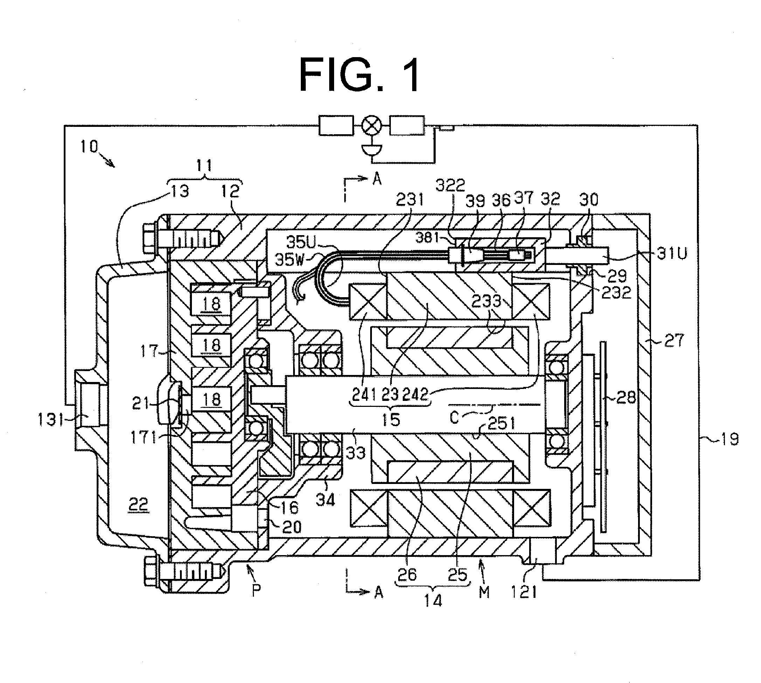

The following describes a motor-driven compressor according to the first preferred embodiment of the present invention with reference to Figs. 1 through 4C.

Referring to Fig. 1, the scroll-type motor-driven compressor designated by 10 has a generally cylindrical shell 11 in which an electric machine or an electric motor M is received. The shell 11 includes a motor housing 12 and a front housing 13 connected to the front end of the motor housing 12.

The electric motor M includes a rotary shaft 33, a rotor 14 fixed to the rotary shaft 33, and a stator 15 fixed on the inner peripheral surface of the motor housing 12. The compressor 10 has a movable scroll 16 and a fixed scroll 17 cooperating to form therebetween compression chambers 18. The movable scroll 16 is revolved by the rotation of the rotary shaft 33, so that the volumes of the compression chambers 18 are varied while the compression chambers 18 are moved from the periphery to the center of the fixed scroll 17. The movable scroll 16 and the fixed scroll 17 are included in a compression portion P which introduces and discharges refrigerant.

The motor housing 12 has an inlet port 121. The inlet port 121 is connected to an external refrigerant circuit 19. Refrigerant (gas) is introduced from the external refrigerant circuit 19 into the motor housing 12 through the inlet port 121. Refrigerant introduced into the motor housing 12 flows into the compression chamber 18 through a passage (not shown) between the inner peripheral surface of the motor housing 12 and the outer peripheral surface of the stator 15 and then through a suction port 20, with the revolution of the movable scroll 16 (suction motion). By the revolution of the movable scroll 16 (discharge motion), the refrigerant in the compression chamber 18 is compressed and pushes open a discharge valve 21 from the discharge port 171. Then, the compressed refrigerant is discharged to a discharge chamber 22 formed in the front housing 13. The refrigerant flows out of the discharge chamber 22 through an outlet port 131 of the front housing 13 into the external refrigerant circuit 19, through which the refrigerant flows back into the motor housing 12.

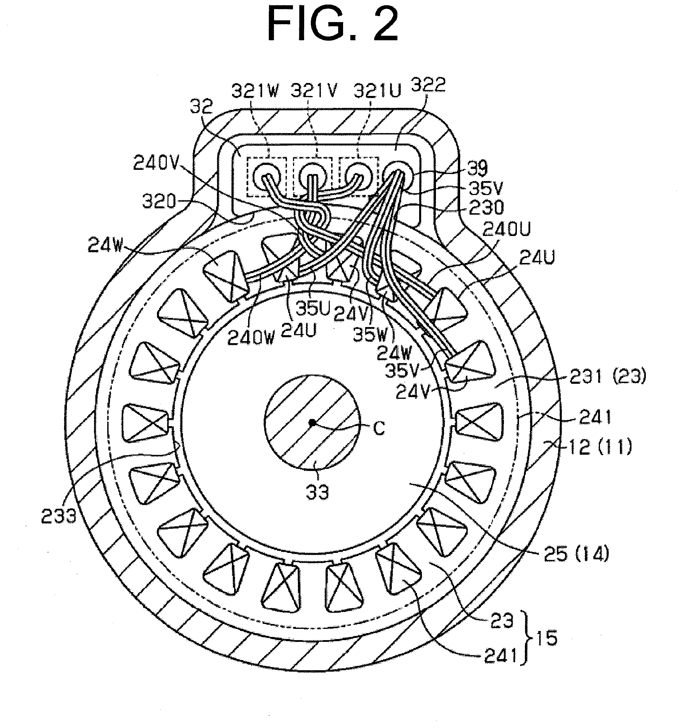

Referring to Fig. 2, the stator 15 of the electric motor M includes a ringshaped stator core 23, a U-phase coil 24U, a V-phase coil 24V, and a W-phase coil 24W wound around the stator core 23.

Referring to Fig. 1, a front side coil end 241 and a rear side coil end 242 are shown. The front side coil end 241 is on a front end face 231 of the stator core 23. The rear side coil end 242 is on the rear end face 232 of the stator core 23.

The rotor 14 of the electric motor M includes a rotor core 25 and a plurality of permanent magnets 26 embedded in the rotor core 25. The rotor core 25 is formed therethrough with a central hole 251 through which the rotary shaft 33 is inserted to fix thereto.

A cover 27 is provided on the rear end surface of the motor housing 12. An inverter 28 by which the electric motor M is driven and controlled is accommodated in the cover 27. An end face of the motor housing 12 that is covered with the cover 27 is formed therethrough with a hole 29. A retainer 30 is fixed in the hole 29.

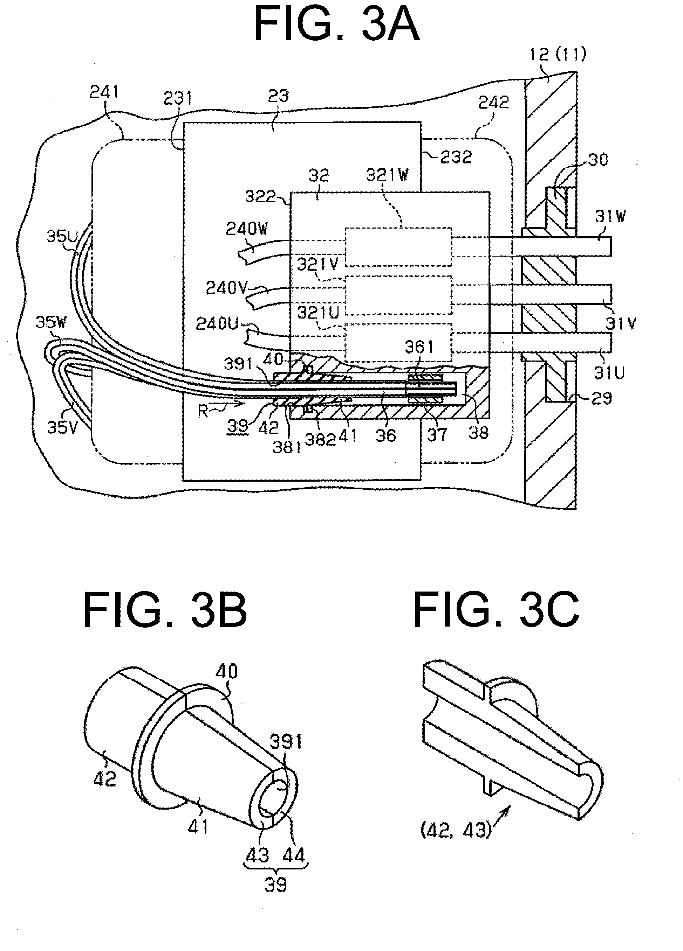

Referring to Fig. 3A, a plurality of conductive pins 31 U, 31V, 31W are inserted through and fixed in the retainer 30 to form a conductive member. External end faces of the conductive pins 31 U, 31V, 31W on the exterior of the shell 11 (motor housing 12) are electrically connected to the inverter 28 (see Fig. 1) through an unshown wire.

Referring to Fig. 1, the motor-driven compressor comprises the compression portion P, the electric motor M, and the inverter 28. The inverter 28 forms a drive control portion. The compression portion P, the electric motor M, and the inverter 28 are arranged in line in the axial direction of the rotary shaft 33.

Referring to Fig. 2, a cluster block 32 made of insulating resin is fixed on the outer peripheral surface 230 of the stator core 23. A concave portion 320 with a circular-arc shape in cross section is formed in the cluster block 32. The cluster block 32 is attached on the outer peripheral surface 230 of the stator core 23 by an unshown attaching means. In this situation, the concave portion 320 is jointed with the convex outer peripheral surface 230 of the stator core 23.

Referring to Fig. 3A, a U-phase connector 321 U, a V-phase connector 321V, and a W-phase connector 321W are provided in parallel in the cluster block 32. The conductive pins 31 U, 31V, 31W are connected in one-to-one relation to the connectors 321 U, 32 1 V, 32 1 W.

Referring to Fig. 2, the lead wire 240U which leads to the U-phase coil 24U is drawn from the front side coil end 241 of the stator core 23 and is connected to the U-phase connector 321 U. The lead wire 240V which leads to the V-phase coil 24V is drawn from the front side coil end 241 and is connected to the V-phase connector 321V. The lead wire 240W which leads to the W-phase coil 24W is drawn from the front side coil end 241 and is connected to the W-phase connector 321W. The lead wire of each phase coil 24U, 24V, 24W has a multiple-wire structure (doublet structure in this embodiment) and each wire of a double wire is covered by enamel resin. The number of lead wires is selected to avoid a high voltage.

Referring to Fig. 3A, the lead wire 240U and the conductive pin 31 U are electrically connected through the U-phase connector 321 U. The lead wire 240V and the conductive pin 31V are electrically connected through the V-phase connector 321V. The lead wire 240W and the conductive pin 31W are electrically connected through the W-phase connector 321W.

Electric power is supplied from the inverter 28 shown in Fig. 1 through the conductive pins 31 U, 31V, 31W (with respect to the conductive pins 31V, 31W, see Fig. 3A), the connectors 321 U, 321V, 321W (see Fig. 2), and the lead wires 240U, 240V, 240W to the coils 24U, 24V, 24W (see Fig. 2), so that the rotor 14 is rotated together with the rotary shaft 33 in the inner peripheral side of the stator core 23 (inside an inner peripheral surface 233 of the stator core 23).

Referring to Fig. 2, the phase wire 35U drawn from the U-phase coil 24U, the phase wire 35V drawn from the V-phase coil 24V, and the phase wire 35W drawn from the W-phase coil 24W are bundled up and form the phase wire bundle 36. The plurality of phase wires 35U, 35V, 35W are drawn from the front side coil end 241 which is at the side of the front end face 231 of the stator core 23 near compression portion P (see Fig. 1).

Referring to Fig. 3A, the tip portions of the phase wires 35U, 35V, 35W which form the phase wire bundle 36 are connected electrically by swaging a conductive ring 37 made of metal. By this structure, the wire joint 361 is formed as neutral point wherein each phase is connected electrically at the tip portion of the phase wire bundle 36.

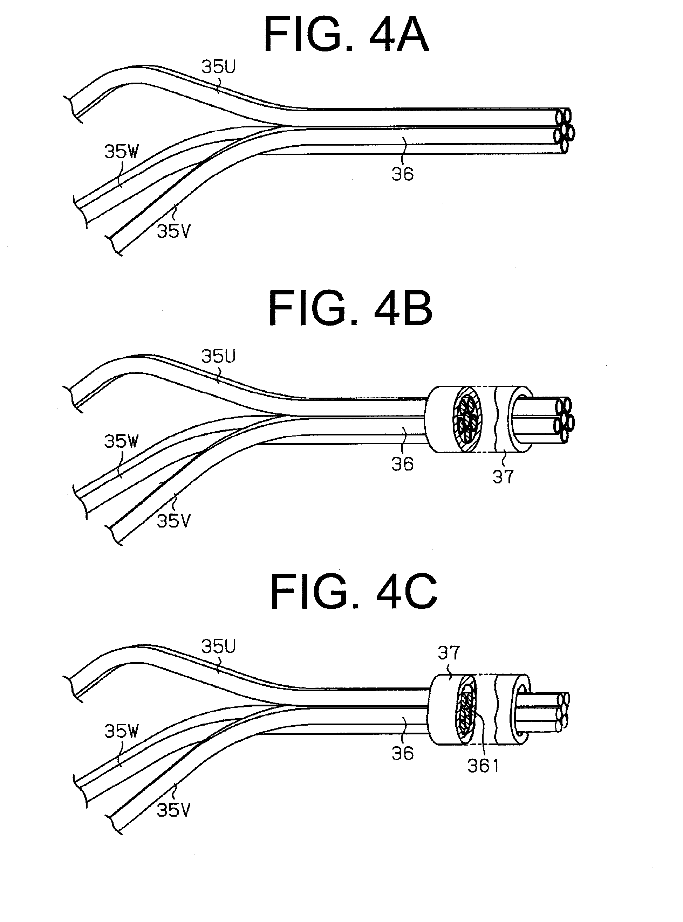

Fig. 4A shows the phase wire bundle 36 formed by binding the phase wires 35U, 35V, 35W which are covered by insulating coating made of enamel resin. Fig. 4B shows the condition in which the tip portion of the phase wire bundle 36 runs through the conductive ring 37. Fig. 4C shows the condition in which the conductive ring 37 is swaged by thermal chalking. By this structure, the insulating coating at the phase wire bundle 36 which is fixed by the swaged conductive ring 37 is melted and the phase wires 35U, 35V, 35W are electrically connected to each other.

Referring to Fig. 3A, a storage chamber 38 is formed with a bottom, or a dead end shape in parallel with the connectors 321 U, 321V, 321W in the cluster block 32. The storage chamber 38 has an insertion opening 381 which opens on the end face 322 of the cluster block 32. The wire joint 361 is inserted in the insertion opening 381 so as to be inserted in the storage chamber 38.

A cylindrical member 39, which is made of rubber, is embedded in the insertion opening 381. The insertion opening 381 is closed by the cylindrical member 39 to make no space between the inner periphery of the insertion opening 381 and the phase wire bundle 36. The cylindrical member 39 has a flange 40 which is formed at the middle thereof in the insertion direction, a tapering outer periphery 41, and a cylindrical surface 42 which is on the opposite side of the tapering outer periphery 41 seen from the flange 40. The diameter of the tapering outer periphery 41 decreases in the insertion direction R.

An annular groove 382 is formed in the inner periphery of the storage chamber 38. The flange 40 is inserted in the annular groove 382.

Referring to Fig. 3B, the cylindrical member 39, which is a closing member, is formed by connecting a first concave piece 43 and a second concave piece 44 with semicircular cross-section shape. The first and second concave pieces 43, 44 are of the same shape and size. Fig. 3C shows a condition before jointing the first and second concave pieces 43, 44.

Then, the following will explain the operation of the first embodiment.

The first and second concave pieces 43, 44 are connected by sandwiching the phase wire bundle 36 which is formed with the wire joint 361 by thermally caulking the conductive ring 37, and are configured in the cylindrical member 39. A cylindrical hole 391 is formed by combining the first and second concave pieces 43, 44. The wire joint 361 is inserted from the insertion opening 381 to the storage chamber 38 in the condition that the wire joint 361 runs through the cylindrical hole 391. Then the cylindrical member 39 is inserted in the insertion opening 381.

The wire joint 361 which is inserted in the storage chamber 38 is installed as far as possible from the insertion opening 381 of the storage chamber 38. By inserting the wire joint 361 as far as possible from the insertion opening 381 of the storage chamber 38, the phase wires 35U, 35V, 35W are stretched without bending. The phase wires 35U, 35V, 35W is prevented from being shifted to the inner peripheral side of the stator core 23. Since the phase wires 35U, 35V, 35W are drawn from the front side coil end 241, the lead wires 240U, 240V, 240W do not get into the inner peripheral side of the stator core 23.

Additionally, the solidified coating material caused on the wire joint 361 by thermal caulking does not go outside from the storage chamber 38 since the wire joint 361 is inserted into the storage chamber 38 and the insertion opening 381 is closed by the cylindrical member 39.

The motor-driven compressor 10 according to the first embodiment offers the following advantages.
(1) The solidified coating material which is melted once remains in the storage chamber 38 since the wire joint 361 is inserted into the storage chamber 38 and the insertion opening 381 is closed by the cylindrical member 39. Therefore, the solidified pieces of coating material do not adversely affect the compressor.
(2) In the condition that the wire joint 361 is retracted in the storage chamber 38, the phase wire bundle 36 does not get into the interior side of the stator core 23. The assembling of members which are to be located in this space (for example, the support block 34 in this embodiment) is not disturbed.
(3) The wire joint 361 is fixed to the cluster block 32 by inserting the wire joint 361 into the storage chamber 38 and by closing the cylindrical member 39 at the insertion opening 381. Inserting and closing are so easy that the work efficiency of assembling the motor-driven compressor is improved.
(4) The cylindrical member 39 does not drop out of the insertion opening 381 since the flange 40 is inserted in the annular groove 382. Additionally, The wire joint 361 does not drop out of the storage chamber 38 since the rubber cylindrical member 39 which is inserted in the insertion opening 381 is elastically deformed and holds the phase wire bundle 36.
(5) By the structure in which the cylindrical member 39 has the tapering outer periphery 41, it is easy to insert the cylindrical member 39 having the phase wire bundle 36 therein into the insertion opening 381.
(6) The divided structure of the cylindrical member 39 makes it easy to insert the wire bundle 36 into the cylindrical hole 391 of the cylindrical member 39.
(7) It is easy to form the storage chamber 38 in the cluster block 32 made of insulating resin. By the structure in that the wire joint 361 is inserted into the storage chamber 38 and the cylindrical member 39 is inserted in the insertion opening 381, it is easy to attach the phase wire bundle 36 to the cluster block 32.
(8) It is possible that the enamel resin, which coats at the tip of each single wire of the phase wire bundle 36, is peeled in advance, and that the peeled tip is connected by swaging the conductive ring 37. However, in the structure in that the wire of each coil has double lines, the number of single wires of the phase wire bundle 36 is increased (in this embodiment, six wires). This makes it troublesome to work to peel the enamel resin in advance and to form the wire joint 361.
   In the thermal caulking, it is easy to form the wire joint 361, since it is not necessary to peel enamel resin in advance.
(9) In the motor-driven compressor 10, the compression portion P, the electric motor M, and the inverter 28 are arranged in line in this order. The plurality of the lead wires 240U, 240V, 240W are drawn from the side of front end face 231 of the stator core 23 near the compression portion P. Therefore, it is not necessary that the electric motor M and the inverter 28 are electrically connected in between the narrow space of both parts (in this embodiment, between the rear end face 232 and the rear wall of the motor housing 12). In the motor-driven compressor 10 in which the compression portion P, the electric motor M, and the inverter 28 are arranged in line, it is easy to connect wires so that the work efficiency of assembling the motor-driven compressor is improved.

Therefore, the structure in which the phase wire bundle 36 is fixed in the cluster block 32 makes it particularly suitable for an application to the motor-driven compressor 10 with an improved working efficiency.
(10) The phase wire bundle 36 is surrounded by the cylindrical member 39, which is made of rubber and is elastically deformed near the insertion opening 381. Additionally, the cylindrical member 39, which is elastically deformed and is made of rubber, is in close contact with the inner periphery of the insertion opening 381. Therefore, even if liquid refrigerant is present in the motor-driven compressor 10, it prevents the wire joint 361 in the storage chamber 38 from being soaked in the liquid refrigerant.

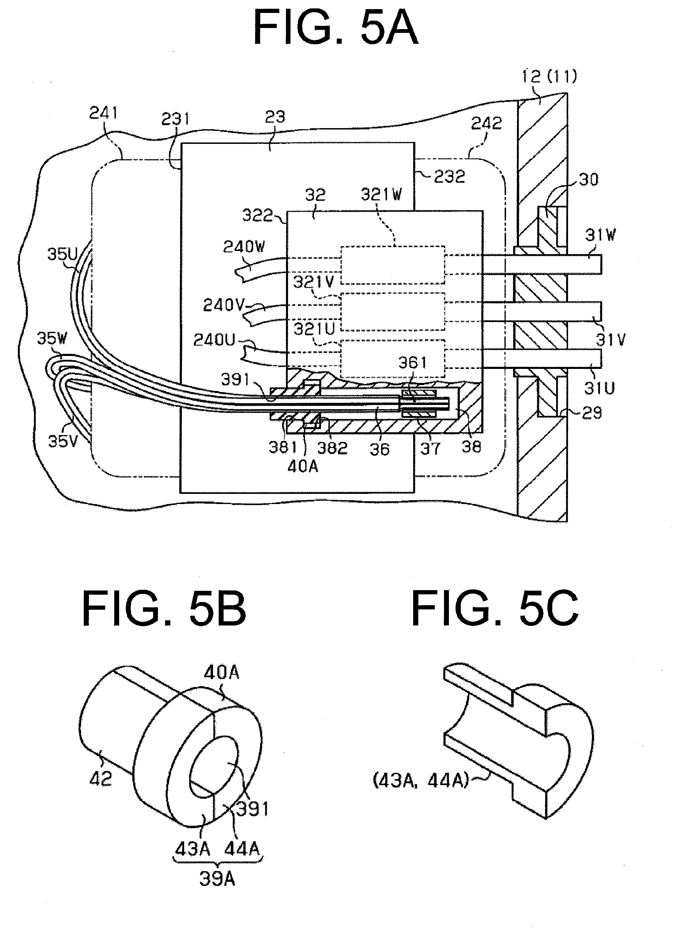

The following describes a second embodiment of the present invention with reference to Figs. 5A through 5C. The portions that are like the first embodiment are denoted by the same reference numerals and redundant explanations are omitted.

The cylindrical member 39A has the flange 40A which is formed at one end and the cylindrical face 42. The flange 40A is inserted into the annular groove 382 which is formed in an inner periphery of the storage chamber 38. The cylindrical member 39A, which is a closure member, is formed by connecting the first concave piece 43A with semicircular cross-section shape and the second concave piece 44A with semicircular cross-section shape. The first concave piece 43A and the second concave piece 44A are of the same shape and the same size. Fig. 5C shows the condition before the first and second pieces 43A and 44A are connected.

The second embodiment offers the advantages from (1) to (5) and from (7) to (10).

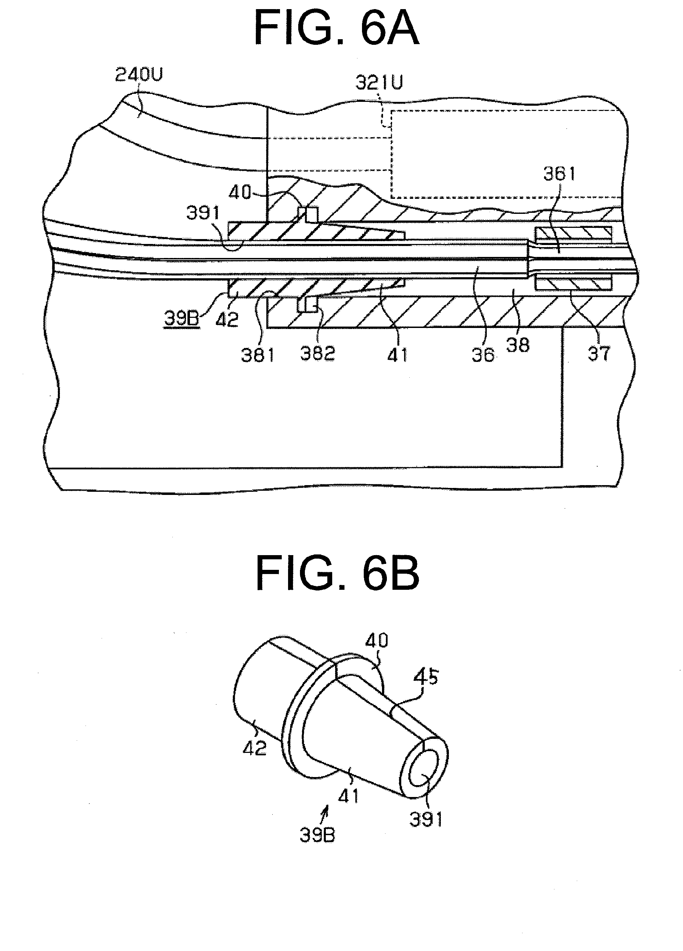

The following describes a third embodiment of the present invention with reference to Figs. 6A and 6B. The portions that are like the first embodiment are denoted by the same reference numerals and redundant explanations are omitted.

The cylindrical member 39B has the same shape as the cylindrical member 39. The cylindrical member 39B has the cylindrical hole 391, and has a cut line 45. The cut line 45 extends from the outer periphery of the cylindrical member 39B to the cylindrical hole 391, and the cut line 45 also extends from one end of the cylindrical member 39B to the other end in the axial direction of the cylindrical hole 391. The cylindrical member 39B is developable from the cut line 45. The phase wire bundle 36 is introduced in the cylindrical hole 391 with spreading the cylindrical member 39B.

The third embodiment offers the same effect as the first embodiment.

The above embodiments may be modified as follows.

In the first and second embodiments, the first and second concave pieces may be integrally formed into a cylindrical member. In this case, the phase wire bundle 36 is laced into a cylindrical hole of the cylindrical member before the wire joint 361 is formed by swaging the conductive ring 37.

In the first and second embodiments, the insertion opening 381 may be closed by an adhesive.

A closure member may be made of synthetic resin. In this case, the closure member may be attached to the cluster block 32 or to the phase wire bundle 36 by melting the closure member made of synthetic resin by ultrasonic wave adhesion, for instance.

A closure member may be formed by winding an insulating tape to the phase wire bundle 36.

A storage chamber may be formed in the shape of a penetrating hole. In this case, an opening which is different from an insert opening may be closed by a plug.

The inverter 28 (drive control portion) may be arranged in the radial direction instead of in the axial direction of the electric motor M.

A motor of motor-driven compressor includes a plurality of phase coils, and a plurality of phase wires are drawn from each of the phase coils. The phase wires are bundled and form a phase wire bundle. The tip portions of the phase wires are connected electrically by a conductive ring caulked by heating. A wire joint is formed so as to connect electrically each phase wire at the tip portion of the phase wire bundle. A storage chamber is formed so as to penetrate a cluster block. The wire joint is inserted in the storage chamber. The insertion opening is closed by a cylindrical member made of rubber.

## Claims

1. A motor-driven compressor (10) comprising:
a shell (11),
an electric motor (M) provided in the shell (11),
a compression portion (P) driven by the electric motor (M) and compressing refrigerant,
a plurality of phase coils (24U, 24V, 24W) and a stator (15) provided in the electric motor (M),
a plurality of lead wires (240U, 240V, 240W) and a plurality of phase wires (35U, 35V, 35W) drawn respectively from the plurality of phase coils (24U, 24V, 24W),
a cluster block (32) having a phase connector (321 U, 321V, 321W), wherein the lead wires (240U, 240V, 240W) are connected to the phase connector (321 U, 321V, 321 W),
a drive control portion of the electric motor (M) outside of the shell (11) being electrically connected to the phase connector (321 U, 321V, 321W) through a conductive retainer (30) penetrating the shell (11),
a phase wire bundle (36) formed by binding the plurality of phase wires (35U, 35V, 35W) drawn respectively from the plurality of phase coils (24U, 24V, 24W),
a wire joint (361) formed at the tip portion of the phase wire bundle (36) by thermal caulking so as to form a neutral point,
wherein each phase wire (35U, 35V, 35W) is connected electrically at the tip portion of the phase wire bundle (36),
**characterized in that** a storage chamber (38) is formed in the cluster block (32), wherein the storage chamber (38) has an insertion opening (381) on the outer periphery of the cluster block (32),
wherein the wire joint (361) is inserted from the insertion opening (381) to the storage chamber (38),
and wherein a closing member (39, 39A, 39B) closes the insertion opening (381).

2. The motor-driven compressor according to claim 1, **characterized in that** the closing member (39, 39A, 39B) is cylindrical and has a cylindrical hole (391), through which the wire joint (361) is inserted.

3. The motor-driven compressor according to claim 2, **characterized in that** the closing member (39, 39A, 39B) is formed by connecting a first concave piece (43, 43A) and a second concave piece (44, 44A).

4. The motor-driven compressor according to claim 2, **characterized in that** the closing member (39, 39A, 39B) has a cut line (45) which extends to the cylindrical hole (391), and the cut line (45) extends from one end of the closing member (39, 39A, 39B) to the other end, and the closing member (39, 39A, 39B) is developable from the cut line (45).

5. The motor-driven compressor according to claims 2 through 4, **characterized in that** the closing member (39, 39A, 39B) has a tapering outer periphery (41) and a diameter of the tapering outer periphery (41) decreases in the insertion direction (R).

6. The motor-driven compressor according to claims 1 through 5, **characterized in that** the closing member (39, 39A, 39B) is made of rubber.

7. The motor-driven compressor according to claims 1 through 6, **characterized in that** the storage chamber (38) is formed into a dead end shape not penetrating the cluster block (32).

8. The motor-driven compressor according to claims 1 through 7, **characterized in that** the storage chamber (38) and the plurality of phase connectors (321 U, 321V, 321W) are arranged in parallel.

9. The motor-driven compressor according to claims 1 through 8, **characterized in that** the compression portion (P), the electric motor (M), and the drive and control portion are arranged in line, and the plurality of phase wires (35U, 35V, 350W) are drawn from an end of the stator (15) near the compression portion (P).
